# EUROPEAN PATENT SPECIFICATION

(11) **EP 4 451 013 B1**
(45) Date of publication and mention of the grant of the patent: **15.07.2026**
(21) Application number: 22914981.0
(22) Date of filing: 28.12.2022
(51) Int. Cl.: G01S 17/08, G01S 7/481, G01S 17/02, G01S 17/931

(54) **LIDAR AND VEHICLE**
LIDAR UND FAHRZEUG
LIDAR ET VÉHICULE

(30) Priority: 31.12.2021 CN 202111679281
(43) Date of publication of application: 23.10.2024
(73) Proprietor: Yinwang Intelligent Technologies Co., Ltd., Shenzhen, Guangdong 518129 (CN)
(72) Inventor: CHEN, Shineng, Shenzhen, Guangdong 518129 (CN); ZHAO, Bo, Shenzhen, Guangdong 518129 (CN); DING, Mingqi, Shenzhen, Guangdong 518129 (CN); HUAN, Qiang, Shenzhen, Guangdong 518129 (CN)
(74) Representative: Gill Jennings & Every LLP
(86) International application number: PCT/CN2022/143047
(87) International publication number: WO 2023/125731

(56) References cited:
- WO-A1-2019/010320
- WO-A1-2021/001502
- CN-A- 113 791 418
- CN-A- 113 791 418
- CN-U- 209 417 295
- CN-U- 214 623 023

## Description

This application claims priority to Chinese Patent Application No. 202111679281.4, filed with the China National Intellectual Property Administration on December 31, 2021, and entitled "LIDAR AND VEHICLE".

### TECHNICAL FIELD

This application relates to the field of radar technologies, and in particular, to a lidar and a vehicle.

### BACKGROUND

A lidar (Light Detection and Ranging, Lidar) is a radar system that emits a laser beam to detect characteristics such as a location, a speed, and the like of a target. An operating principle of the lidar is to transmit a detection signal (a laser beam) to the target, then compare a received signal (a target echo) reflected from the target with the transmitted signal, and perform appropriate processing to obtain related information about the target, such as a parameter including a target distance, an orientation, a height, a speed, a posture, even a shape, and the like, to detect, track, and identify the target.

In a conventional technology, the lidar may include a laser and a photodetector. The laser may convert an electrical pulse into an optical pulse and transmit the optical pulse, and the photodetector restores, to an electrical pulse, an optical pulse reflected from the target.

However, in the conventional technology, no temperature control apparatus for cooling or heating the laser is disposed. A wavelength of a laser beam output by the laser is affected by a temperature of the laser. The corresponding photodetector has a specific requirement for a wavelength range of a received laser beam. If a temperature deviation of the laser is excessively large, a wavelength deviation of the laser beam is excessively large, and some laser energy exceeds a receivable wavelength range of the photodetector. This affects performance of the lidar. WO 2019/010320 A1 discloses a solid-state electronic scanning LIDAR system that includes a scanning focal plane transmitting element and a scanning focal plane receiving element whose operations are synchronized so that the firing sequence of an emitter array in the transmitting element corresponds to a capturing sequence of a photosensor array in the receiving element. CN 113791418 A discloses a laser ranging radar, relates to the technical field of measurement, and aims to improve the ranging accuracy of the laser ranging radar.

### SUMMARY

Embodiments of this application provide a lidar and a vehicle, to resolve a temperature control problem of a laser.

An aspect of embodiments of this application provides a lidar, including a bracket and an emission assembly. The emission assembly includes a substrate, a circuit board, an optical lens, a laser, and a temperature control device, the substrate is connected to the bracket, the optical lens and the circuit board are each separately connected to a first side of the substrate, the first side being opposite to a second side of the substrate which is attached to the bracket, the laser is connected to a first side of the circuit board the first side being opposite to a second side of the circuit board which is attached to and faces the substrate, the temperature control device is connected to the second side of the circuit board, a hole passes through the substrate, the temperature control device and the bracket are connected to each other through the hole, and a thermal gel is disposed between the temperature control device and the bracket. In this embodiment of this application, the laser is fastened to the circuit board, components of the laser and the circuit board are fastened to the substrate, and the optical lens is fastened to the substrate, so that the laser and the optical lens that are most sensitive to precision are finally fastened to a same module, that is, the substrate. This can avoid that thermal expansion and cold contraction effect caused by a temperature change affects size precision between the laser and the optical lens. In addition, the temperature control device is disposed to implement active temperature control, so that a temperature control problem of the laser can be resolved, and impact of a temperature on a wavelength of a laser beam emitted by the laser is avoided.

In a possible implementation, the substrate includes a main body part and a support, the support is connected to a side wall of the main body part, a plane on which the support is located is perpendicular to a plane on which the main body part is located, the support is located on a side of the main body part that faces the circuit board, the circuit board is connected to the main body part, the optical lens is connected to the support, the laser is located at an end that is of the circuit board and that is close to the optical lens, and the laser and the optical lens are disposed opposite to each other. The substrate has two parts of structures, respectively configured to carry the laser and the optical lens. On a basis that the laser and the optical lens are integrated on the same substrate, the optical lens can be aligned with the laser. Space utilization is appropriate.

In a possible implementation, the temperature control device is a thermo electric cooler, and the thermo electric cooler is configured to heat or cool the circuit board. The thermo electric cooler can raise a temperature of the laser when an external ambient temperature is low, and lower the temperature of the laser when the external ambient temperature is high. In this way, the temperature of the laser is in a constant range, and the impact of the temperature on the wavelength of the laser beam emitted by the laser is avoided.

In a possible implementation, a coefficient of thermal expansion of the substrate is less than 10 PPM. The substrate is set to have a low coefficient of thermal expansion, so that a large deviation of size precision between the laser and the optical lens caused by the thermal expansion and cold contraction effect at high and low temperatures can be avoided.

In a possible implementation, the coefficient of thermal expansion of the substrate ranges from 4 PPM to 10 PPM. The coefficient of thermal expansion of the substrate is set to range from 4 PPM to 10 PPM. This is more likely to implement, and an adhesive between the substrate and the bracket is not prone to cracking.

In a possible implementation, an absolute value of a difference between the coefficient of thermal expansion of the substrate and a coefficient of thermal expansion of the circuit board is less than or equal to 2 PPM. When the temperature changes greatly, in spite of impact of the thermal expansion and cold contraction, because the coefficient of thermal expansion of the substrate is close to the coefficient of thermal expansion of the circuit board, a difference in impact on the substrate and the circuit board is small, and performance of the adhesive between the substrate and the circuit board can be ensured.

In a possible implementation, the substrate is made of a material including a kovar alloy, ceramic, or glass. The kovar alloy, the ceramic, or the glass is disposed as the substrate, so that a low coefficient of thermal expansion requirement of the substrate can be met.

In a possible implementation, the circuit board is made of a material including aluminum nitride ceramic. The aluminum nitride ceramic is disposed as the circuit board, so that a high thermal conductivity requirement and a low coefficient of thermal expansion requirement of the circuit board can be met.

In a possible implementation, the bracket is made of a material including an aluminum alloy. The aluminum alloy is disposed as the bracket, so that a structural strength requirement and a high thermal conductivity requirement of the bracket can be met.

In a possible implementation, each of two ends of the circuit board is fastened to the substrate by using a cushion block, and the cushion block is a part of a structure protruding from a surface of the substrate, or the cushion block is a structure independent of the substrate and is fastened to the substrate. The cushion block can reduce a contact area between the substrate and the circuit board, increase space between the substrate and the circuit board, and reduce heat backflow effect.

In a possible implementation, both a length and a width of the cushion block are less than 3 mm. The cushion block has a small area, so that the heat backflow effect is minimized.

In a possible implementation, the lidar further includes a buffer sheet, the buffer sheet is located between the bracket and the substrate, the buffer sheet is bonded to the bracket by using an adhesive, and the buffer sheet is welded to the substrate, or the buffer sheet is bonded to the substrate by using an adhesive. The buffer sheet can improve reliability of bonding between the substrate and the bracket. In addition, the buffer sheet can overcome a stress caused by a mismatch between the coefficient of thermal expansion of the substrate and a coefficient of thermal expansion of the bracket.

In a possible implementation, a coefficient of thermal expansion of the buffer sheet is greater than the coefficient of thermal expansion of the substrate, and the coefficient of thermal expansion of the buffer sheet is less than the coefficient of thermal expansion of the bracket.

In a possible implementation, an installation column is disposed on a side that is of the substrate and that faces the bracket, an installation hole is disposed on a side that is of the bracket and that faces the substrate, the installation column is located in the installation hole, and a gap between the installation column and the installation hole is filled with an adhesive. Adhesive bonding between the installation column and the installation hole can increase adhesive bonding strength between the substrate and the bracket, so that reliability of the adhesive can be further met in cases of high and low temperatures and shock vibration.

In a possible implementation, the lidar includes an optical machine, the optical machine includes the bracket, the emission assembly, and a receiving assembly, and the receiving assembly and the emission assembly are separately fastened to the bracket. The bracket is configured to install the emission assembly and the receiving assembly, so that optical precision machines in the lidar are integrated together to improve integration of a structure.

In a possible implementation, the lidar further includes a housing and a scanner, both the optical machine and the scanner are installed on the housing, and a light output axis of the optical machine is aligned with a rotation mirror of the scanner. A laser beam emitted by the optical machine is reflected by the rotation mirror, and the optical machine is aligned with the rotation mirror, to ensure that all the laser beams emitted by the optical machine are reflected by the rotation mirror. This ensures a field of view range of the lidar.

In a possible implementation, a pin is disposed on the housing, a kidney-shaped hole is provided in the bracket, a length direction of the kidney-shaped hole is perpendicular to the light output axis, the pin is installed in the kidney-shaped hole, and a location of the pin in the kidney-shaped hole can be adjusted. The location of the optical machine can be adjusted when assembled on the housing. This helps improve location precision between the optical machine and the rotation mirror, so that the lidar can achieve a larger FOV.

In a possible implementation, the optical lens is bonded to the substrate by using an adhesive, and the circuit board is bonded to the substrate by using an adhesive. The optical lens and the circuit board are separately bonded to the substrate by using an adhesive, so that fastening reliability can be ensured.

In a possible implementation, at least one slot is provided on a side wall of the substrate. The slot is disposed to reduce a thermal conduction area of the substrate and to reduce the heat backflow effect.

Another aspect of embodiments of this application provides a vehicle, including a vehicle body and the foregoing lidar. The lidar is fastened to the vehicle body.

An embodiment of this application provides a vehicle. The lidar provided in the foregoing embodiments of this application can reduce impact of the temperature on performance of the lidar, and provide performance of a large field of view. This helps improve performance such as ranging of the vehicle, and facilitates intelligence of the vehicle.

An embodiment of this application provides a lidar and a vehicle. The laser is fastened to a circuit board, components of the laser and the circuit board and an optical lens are fastened to a same substrate, and a temperature control device is used to actively control a temperature of the laser, so that an operating temperature of the laser can be accurately controlled not to exceed a standard. This avoids impact of the temperature on a laser wavelength. In addition, a deviation of size precision between the laser and the optical lens at high and low temperatures can be avoided, so that optical performance of the lidar can be improved. In addition, a buffer sheet and a fitting structure of an installation column and an installation hole are disposed. This can improve adhesive bonding strength of an emission assembly and a bracket, avoid that an adhesive cracks at high and low temperatures and under shock vibration, and improve bonding reliability. A kidney-shaped hole is designed in the bracket to match a pin designed on a housing, so that a location of an optical machine relative to the housing can be adjusted in one direction and fastened. This implements precise alignment of a relative location of the optical machine and a scanner, and a large field of view is achieved.

For the lidar provided in embodiments of this application, the temperature control device is disposed, so that the temperature of the laser can be constantly controlled at 75±5°C at an external ambient temperature of -40°C to +85°C. The laser and the optical lens are integrated on the same substrate, and the substrate is disposed to be made of a material with a low coefficient of thermal expansion, so that a size deviation between the laser and the optical lens can be controlled to be less than 5 microns at the external ambient temperature of -40°C to +85°C. In addition, in high and low temperature and vibration tests, reliability of bonding between the emission assembly and the bracket meets a design requirement. The location of the optical machine is set to be adjustable, so that performance of a large field of view of 140 degrees can be achieved.

### BRIEF DESCRIPTION OF DRAWINGS

FIG. 1 is a schematic diagram of a structure of a vehicle according to an embodiment of this application;
FIG. 2 is a schematic diagram of a detection range of a lidar on a vehicle according to an embodiment of this application;
FIG. 3 is a schematic diagram of an external structure of a lidar according to an embodiment of this application;
FIG. 4 is a schematic diagram of an internal structure of a lidar according to an embodiment of this application;
FIG. 5 is a schematic diagram of a structure of an optical machine according to an embodiment of this application;
FIG. 6 is a schematic exploded view of an optical machine according to an embodiment of this application;
FIG. 7 is a schematic diagram of a simplified structure of an emission assembly and a bracket according to an embodiment of this application;
FIG. 8 is a schematic diagram of a heat dissipation path of an emission assembly according to an embodiment of this application.
FIG. 9 is a schematic diagram of a structure of a bracket according to an embodiment of this application;
FIG. 10 is a schematic diagram of a structure of an emission assembly according to an embodiment of this application;
FIG. 11 is a schematic diagram of a structure of an emission assembly from another angle according to an embodiment of this application;
FIG. 12 is a schematic top view of a lidar according to an embodiment of this application;
FIG. 13 is a schematic diagram of an operating principle of a lidar according to an embodiment of this application;
FIG. 14 is a schematic diagram of a simplified structure of a lidar according to an embodiment of this application;
FIG. 15 is a top view of a housing according to an embodiment of this application;
FIG. 16 is a schematic diagram of a structure of a bracket from another angle according to an embodiment of this application; and
FIG. 17 is a bottom view of a bracket according to an embodiment of this application.

Descriptions of reference numerals:
100-lidar; 11-housing; 111-pin; 12-optical machine; 13-scanner; 13 1-rotation mirror;
21-bracket; 211-first accommodation cavity; 212-second accommodation cavity; 213-third accommodation cavity; 214-installation boss; 215-installation hole; 216-kidney-shaped hole;
22-emission assembly; 221-substrate; 221a-main body part; 221b-support; 2211-hole; 2212-cushion block; 2213-slot; 2214-installation column; 222-circuit board; 223-optical lens; 224-laser; 225-temperature control device; 226-thermal gel; 227-buffer sheet; 2281-first adhesive; 2282-second adhesive; 2283-third adhesive;
23-receiving assembly; 24-mirror group.

### DESCRIPTION OF EMBODIMENTS

A lidar is a radar system that emits a laser beam to detect characteristics such as a location, a speed, and the like of a target, has advantages such as high resolution, good concealment, a strong anti-active interference capability, a small size, and the like, and is widely used in fields such as resource exploration, traffic communication, environment monitoring, and the like.

The lidar may be mounted on a vehicle as an important part of an intelligent driving environment sensing system. The vehicle-mounted lidar has advantages such as accurate acquisition of three-dimensional information of the target, high resolution, a strong anti-interference capability, a wide detection range, near-all-weather operation, and the like.

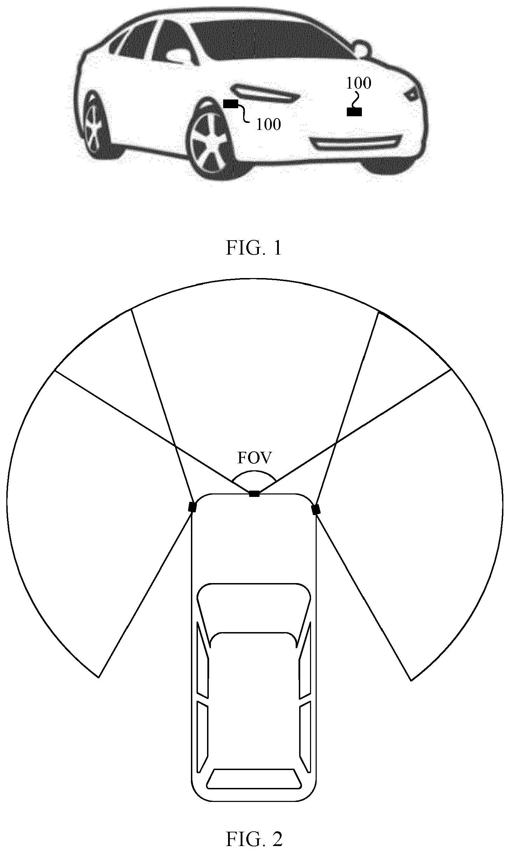

FIG. 1 is a schematic diagram of a structure of a vehicle according to an embodiment of this application. Refer to FIG. 1. An aspect of embodiments of this application provides a vehicle. The vehicle includes a vehicle body and a lidar 100 mounted on the vehicle body. There may be one or more lidars 100. For a location at which the lidar 100 is mounted on the vehicle body, refer to the figure. For example, the lidar 100 may be mounted at a location such as front, left front, right front, rear, or the like of the vehicle body, to detect a larger coverage area and to improve driving environment safety of the vehicle.

FIG. 2 is a schematic diagram of a detection range of a lidar on a vehicle according to an embodiment of this application. Refer to FIG. 2. An example in which the lidar 100 is disposed at three locations of a front, a left front, and a right front of the vehicle body is used. A detection field of view of the lidar 100 is an FOV. A larger FOV indicates a larger coverage area that can be detected. That is, the FOV is a key performance parameter of the lidar 100.

In addition, an optical machine is a key core component of the vehicle-mounted lidar, and needs to output a stable high-quality laser beam and accurately receive a reflected laser beam within an entire life cycle of the vehicle. The optical machine may include an emission assembly and a receiving assembly. The emission assembly is configured to output a laser wavelength, the receiving assembly is configured to receive a laser beam reflected from a target, and a core component of the emission assembly is a laser.

Currently, there are many difficulties in structural design of the lidar. The wavelength of the laser beam output by the laser is affected by a temperature of the laser, and the corresponding receiving assembly also has a specific requirement for a wavelength range of a received laser beam. If a temperature deviation of the laser is excessively large, a wavelength deviation of the laser beam is excessively large, and some laser energy exceeds a receivable wavelength range of the receiving assembly. This affects receiving efficiency and further affects a performance indicator of a detection distance. Therefore, how to perform temperature control design of the laser is one of the difficulties in the structural design of the lidar.

In a conventional technology, a mainstream laser of the lidar is an edge emitting laser (Edge Emitting Laser, EEL). The EEL has advantages such as a high peak optical power, high energy efficiency, and the like, and is a preferred light source of a long-distance vehicle-mounted lidar product. How to control a temperature of the optical machine using the EEL is also a currently key challenge in structural design of the optical machine of the lidar.

In addition, the waveform of the laser beam directly output by the laser generally does not meet a condition for direct use of the lidar, and an optical lens needs to be used for beam shaping. However, size precision between the laser and the optical lens affects laser quality. Based on an optical design requirement, the size precision between the laser and the optical lens needs to be maintained at a micron level in an entire life cycle. Machining precision and bonding reliability of components and parts, and impact of thermal expansion and cold contraction caused by a temperature change of the components and parts lead to change of the size precision between the laser and the optical lens. Therefore, how to implement a design of controlling size precision between the laser and the optical lens is one of challenges in a current design.

In a conventional technology, the laser and a peripheral circuit may be installed on a thermo electric cooler (Thermo Electric Cooler, TEC), and are fastened to an outer housing of the lidar together with the optical lens. In this conventional technology, if sizes of the laser and the peripheral circuit are large, a size of the TEC needs to be increased, and a power consumption size needs to be increased. In addition, weights of the laser and the peripheral circuit are on the TEC, and in a vibration scenario, requirements for strength of the TEC and corresponding fastening strength are high. In addition, the laser is fastened to the outer housing by using the TEC, and the optical lens is directly fastened to the outer housing. Therefore, the TEC also participates in a process of locating a size between the laser and the lens. In thermal expansion and cold contraction effect caused by a temperature change, the size precision between the optical lens and the laser is further affected by the TEC. This is not conducive to shortening a size chain of a location relationship between the optical lens and the laser.

Therefore, in this conventional technology, the laser is carried by using the thermo electric cooler. Although the TEC may be used to control the temperature of the laser, this technology is applicable only to a case in which the sizes of the laser and the peripheral circuit are small, for example, in a scenario in which an optical fiber laser, an optical module, or the like is used, and cannot be applicable to a scenario in which a large-sized lidar using an EEL laser is used.

Based on the foregoing problem, an embodiment of this application provides a lidar. An optical lens and a laser are fastened to a same substrate, and a temperature control device is used to actively control a temperature of the laser, so that impact of the temperature on the laser wavelength is avoided. In addition, size precision between the laser and the optical lens can be reduced, and optical performance of the lidar can be improved.

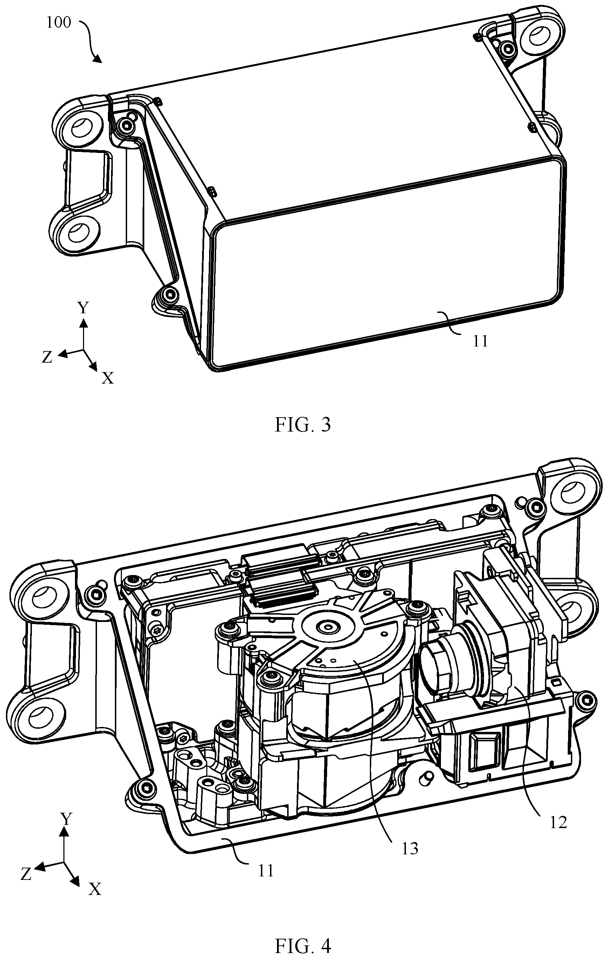

FIG. 3 is a schematic diagram of an external structure of the lidar according to an embodiment of this application. FIG. 4 is a schematic diagram of an internal structure of the lidar according to an embodiment of this application. Refer to FIG. 3 and FIG. 4. The lidar 100 provided in this embodiment of this application may include a housing 11, and an optical machine 12 and a scanner 13 that are disposed inside the housing 11.

A structure of the housing 11 is not specifically limited in this embodiment of this application. For example, the housing 11 may include an upper housing and a lower housing (not marked in the figure). The upper housing and the lower housing may be fastened in a manner of bonding, screw connection, or the like, to form accommodating space for accommodating the optical machine 12 and the scanner 13.

The optical machine 12 and the scanner 13 may be separately fastened to the housing 11, for example, may be fastened to a bottom wall of the lower housing (in the figure, a positive direction of a Y-axis is an upper direction, and a negative direction is a lower direction). The optical machine 12 is configured to emit and receive a laser beam. A rotation mirror is disposed in the scanner 13. The laser beam emitted by the optical machine 12 may be illuminated on a reflective surface of the rotation mirror and then be reflected. A light output axis of the optical machine 12 may be aligned with the rotation mirror of the scanner 13. For example, the optical machine 12 and the scanner 13 may be spaced on a Z-axis, and the light output axis of the optical machine 12 may extend in a Z direction in the figure.

In addition, an information processing system (not marked in the figure) is further disposed inside the housing 11. The information processing system is configured to process a laser signal received by the optical machine 12. Another component is further disposed inside the housing 11. Details are not described herein. It should be understood that the optical machine 12 is configured to output a stable high-quality laser beam and can accurately receive a reflected laser beam, and is a key core component of the lidar 100.

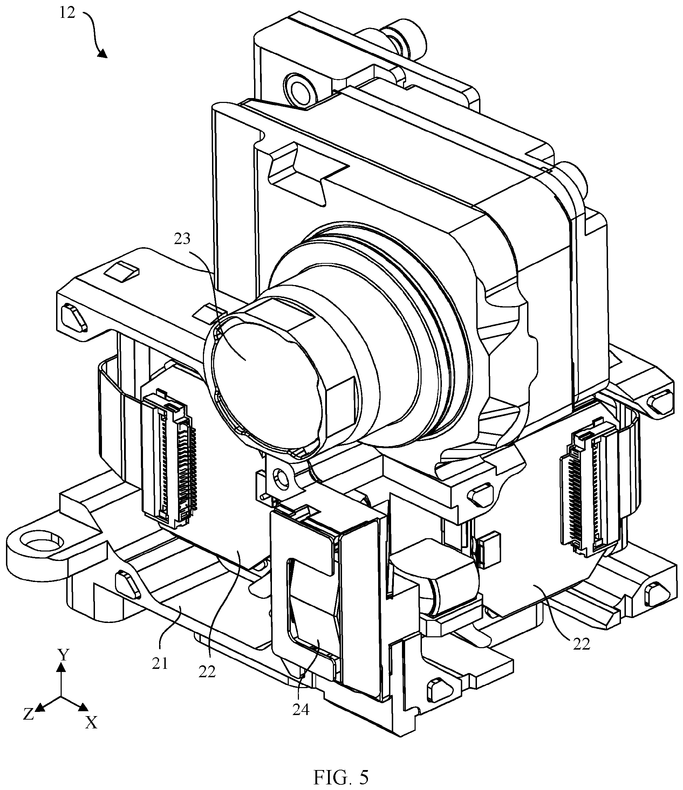

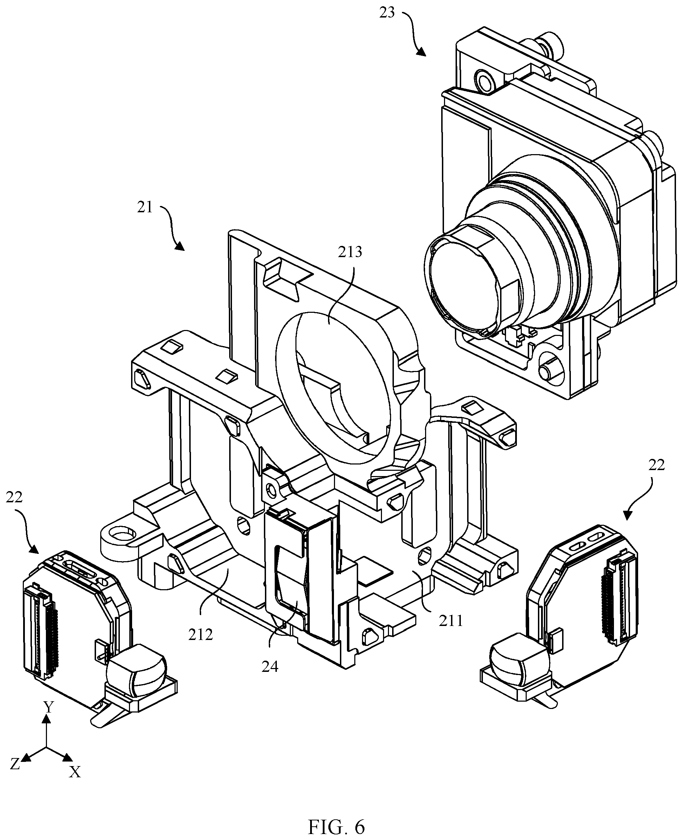

FIG. 5 is a schematic diagram of a structure of an optical machine according to an embodiment of this application. FIG. 6 is a schematic exploded view of an optical machine according to an embodiment of this application. Refer to FIG. 5 and FIG. 6. In this embodiment of this application, an optical machine 12 may include a bracket 21, emission assemblies 22, and a receiving assembly 23. The receiving assembly 23 and the emission assemblies 22 may be separately fastened to the bracket 21.

The bracket 21 may include a first accommodation cavity 211, a second accommodation cavity 212, and a third accommodation cavity 213. The first accommodation cavity 211 and the second accommodation cavity 212 are respectively configured to accommodate the emission assemblies 22, and the third accommodation cavity 213 is configured to accommodate the receiving assembly 23. Structures of the two emission assemblies 22 are mirror-symmetric, structures of the first accommodation cavity 211 and the second accommodation cavity 212 are mirror-symmetric, and the first accommodation cavity 211 and the second accommodation cavity 212 may be respectively disposed on two adjacent side surfaces of the bracket 21. For example, an opening direction of the first accommodation cavity 211 is a positive direction of an X-axis, and an opening direction of the second accommodation cavity 212 is a positive direction of a Z-axis. The third accommodation cavity 213 is located above the first accommodation cavity 211 and the second accommodation cavity 212, and is disposed as a structure of a ring-shaped through hole. The receiving assembly 23 is disposed in the ring-shaped through hole in a penetrating manner. Specific structures of the third accommodation cavity 213 and the receiving assembly 23 are not specifically described in this application.

The optical machine 12 may further include a mirror group 24. The mirror group 24 may be connected to the bracket 21, and is located between the first accommodation cavity 211 and the second accommodation cavity 212. Laser beams emitted by the two emission assemblies 22 may enter the mirror group 24, converge in the mirror group 24, and then are emitted outward.

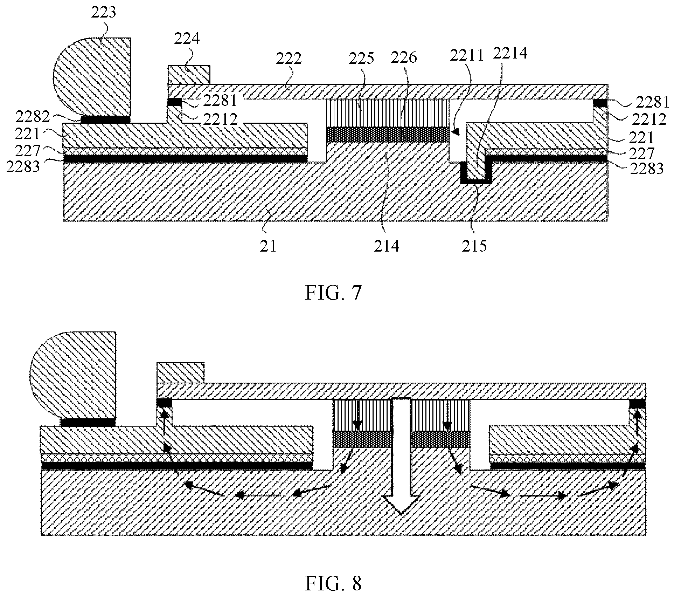

FIG. 7 is a schematic diagram of a simplified structure of an emission assembly and a bracket according to an embodiment of this application. It should be understood that FIG. 7 shows a part of a structure of the bracket 21, that is, a sectional view corresponding to one emission assembly 22. Refer to FIG. 7. In this embodiment of this application, the emission assembly 22 may include a substrate 221, a circuit board 222, an optical lens 223, a laser 224, and a temperature control device 225.

The substrate 221 may be connected to the bracket 21, the optical lens 223 and the circuit board 222 may be separately connected to a side that is of the substrate 221 and that backs onto the bracket 21, the laser 224 may be connected to a side that is of the circuit board 222 and that backs onto the substrate 221, the temperature control device 225 may be connected to a side that is of the circuit board 222 and that faces the substrate 221, a hole 2211 is disposed in the substrate 221, the temperature control device 225 and the bracket 21 are connected to each other in the hole 2211, and a thermal gel 226 is disposed between the temperature control device 225 and the bracket 21.

A vertical direction in the figure is used as an example. The laser 224 may be welded above the circuit board 222, the circuit board 222 may be bonded to the substrate 221 by using a first adhesive 2281, the optical lens 223 may be bonded to the substrate 221 by using a second adhesive 2282, and the substrate 221 may be bonded to the bracket 21 by using a third adhesive 2283. The laser 224 may be disposed at an end that is of the circuit board 222 and that is close to the optical lens 223, so that the laser 224 and the optical lens 223 are disposed close and opposite to each other.

In a possible implementation, the lidar 100 may further include a buffer sheet 227. The buffer sheet 227 is located between the bracket 21 and the substrate 221. The buffer sheet 227 may be welded to the substrate 221, or the buffer sheet 227 may be bonded to the substrate 221 by using an adhesive, and the buffer sheet 227 may be bonded to the bracket 21 by using the third adhesive 2283.

A specific form of the optical lens 223 is not specifically limited in this embodiment of this application. For example, the optical lens 223 may be in a form of a double convex thick aspheric lens, and is configured to collimate diverged light emitted by the laser 224. The laser 224 may be an edge emitting laser (Edge Emitting Laser, EEL), for example, may be a four-channel or an eight-channel laser.

The temperature control device 225 is connected to the bracket 21. The temperature control device 225 is a device for temperature control, and may be configured to heat the laser 224 when an external ambient temperature is low or cool the laser 224 when an external ambient temperature is high, so that a temperature of the laser 224 is in a constant range. This avoids impact of a temperature on a wavelength of a laser beam emitted by the laser 224. A specific type of the temperature control device 225 is not specifically limited in this embodiment of this application. The temperature control device 225 may be a thermo electric cooler TEC, and may be controlled to cool or heat the circuit board 222 and the laser 224 by switching positive and negative electrodes of the thermo electric cooler.

It should be understood that a location in which the temperature control device 225 is connected to the substrate 221 may be maximumly close to the laser 224, to improve heat transfer efficiency. A hole 2211 is disposed in the substrate 221, so that the temperature control device 225 may be connected to the bracket 21 in the hole 2211, to smoothly transfer heat to the bracket 21.

The temperature control device 225 is connected to the bracket 21, to transfer heat to the bracket 21. The temperature control device 225 may transfer the heat to the bracket 21 by using the thermal gel 226, to improve heat dissipation efficiency. For example, a thickness of the thermal gel 226 may be less than 1.5 mm, and a thermal conductivity coefficient of the thermal gel 226 may be 5 W/m·K to 15 W/m·K.

The bracket 21 is configured to fasten and install the substrate 221, to implement heat dissipation for the laser 224. The bracket 21 may be made of a metal such as an aluminum alloy through die casting or through machining an aluminum profile. A coefficient of thermal expansion of a manufacturing material of the bracket 21 may range from 21 **PPM** to 24 **PPM,** for example, may be approximately 23 PPM. A thermal conductivity coefficient of the bracket 21 may range from 140 W/m·K to 200 W/m·K.

The substrate 221 is configured to carry the optical lens 223 and the laser 224, and may be made of a material with a low coefficient of thermal expansion (Coefficient of thermal expansion, CTE) and a low thermal conductivity coefficient. A coefficient of thermal expansion of the substrate 221 is less than a coefficient of thermal expansion of the bracket 21, and the coefficient of thermal expansion of the substrate 221 may be less than or equal to 10 PPM.

A coefficient of thermal expansion of the buffer sheet 227 may be greater than the coefficient of thermal expansion of the substrate 221, and is less than the coefficient of thermal expansion of the bracket 21. For example, the coefficient of thermal expansion of the buffer sheet 227 may range from 5 **PPM** to 23 PPM. The buffer sheet 227 can improve reliability of bonding between the substrate 221 and the bracket 21. The coefficient of thermal expansion of the buffer sheet 227 is set to be between the coefficients of thermal expansion of the substrate 221 and the bracket 21, so that a stress caused by a mismatch between the coefficients of thermal expansion can be overcome. A material of the buffer sheet 227 is not specifically limited in this embodiment of this application. The buffer sheet 227 may be made of a material such as stainless steel, aluminum, or the like, and a thickness of the buffer sheet 227 may range from 0.2 mm to 2.0 mm.

It should be understood that it is difficult to select a material whose coefficient of thermal expansion is less than 4 PPM as the substrate 221, and if the coefficient of thermal expansion of the substrate 221 is excessively small, the third adhesive 2283 between the buffer sheet 227 and the bracket 21 is prone to cracking. For example, the coefficient of thermal expansion of the substrate 221 may range from 4 **PPM** to 10 PPM. This is more likely to implement, and the third adhesive 2283 is not prone to cracking. The thermal conductivity coefficient of the substrate 221 is less than 50 W/m·K.

A manufacturing material of the substrate 221 includes but is not limited to a kovar alloy, ceramic (such as aluminum oxide, zirconia, or the like), glass, and the like. In a possible implementation, the substrate 221 may be a kovar alloy whose coefficient of thermal expansion is approximately 5.5 PPM, for example, may be a kovar alloy whose grade is 4J29 and whose coefficient of thermal expansion is 5.5 PPM.

In addition, an absolute value of a difference between the coefficient of thermal expansion of the substrate 221 and a coefficient of thermal expansion of the circuit board 222 is less than or equal to 2 PPM. The circuit board 222 may be made of a plate material with a high thermal conductivity coefficient, for example, aluminum nitride ceramic. For example, the coefficient of thermal expansion of the circuit board 222 may range from 4 PPM to 6 PPM.

The substrate 221 is set to have a low coefficient of thermal expansion, the substrate 221 is unlikely to be affected by thermal expansion and cold contraction, and size precision is more stable, so that a large deviation of size precision between the laser 224 and the optical lens 223 caused by thermal expansion and cold contraction effect at high and low temperatures can be avoided. Even if the substrate 221 is affected by the thermal expansion and cold contraction, the coefficients of thermal expansion of the substrate 221 and the circuit board 222 are set to be close, and impact of a temperature on the substrate 221 and the circuit board 222 are also similar, so that impact on size precision is small. In addition, performance of the second adhesive 2282 between the substrate 221 and the circuit board 222 can also be ensured, and the second adhesive 2282 is not prone to cracking caused by a large deformation difference between the substrate 221 and the circuit board 222.

In a possible implementation, the coefficient of thermal expansion of the circuit board 222 may range from 4 PPM to 5 PPM, and is less than the coefficient of thermal expansion of the substrate 221. The coefficient of thermal expansion of the substrate 221 may be 5.5 PPM, and is less than the coefficient of thermal expansion of the bracket 21. The coefficient of thermal expansion of the bracket 21 may be 23 PPM.

An installation boss 214 may be disposed on a side that is of the bracket 21 and that faces the substrate 221, and the installation boss 214 may correspond to a location of the temperature control device 225, to reduce a distance between the temperature control device 225 and the bracket 21, so that the temperature control device 225 may be connected to the installation boss 214 by using the thermal gel 226. The installation boss 214 may be a part of a structure of the bracket 21, or the installation boss 214 may be a structure that is independent of the bracket 21 and that is fastened to the bracket 21.

FIG. 8 is a schematic diagram of a heat dissipation path of an emission assembly according to an embodiment of this application. Refer to FIG. 8. For heat generated by the laser 224 and the circuit board 222, the heat is transferred to the bracket 21 through the temperature control device 225 and the thermal gel 226 in a main heat dissipation path (as shown by a large arrow in the figure), and a small part of the heat flows back (as shown by small arrows in the figure), and returns to the circuit board 222 through the bracket 21 and the substrate 221.

In addition, a cushion block 2212 may be disposed on a surface that is of the substrate 221 and that backs onto the bracket 21, and the circuit board 222 is fastened to the cushion block 2212. The cushion block 2212 is configured to perform a cushion function. The cushion block 2212 may be, for example, in a form of a boss, a bump bar, a bump point, or the like, and can reduce a contact area between the substrate 221 and the circuit board 222, increase space between the substrate 221 and the circuit board 222, and reduce heat backflow effect.

The cushion block 2212 may be a part of a structure protrudingly disposed on the substrate 221, and is integrated with the substrate 221. Alternatively, the cushion block 2212 may be a heat insulation block with a low thermal conductivity coefficient, and is fastened to the substrate 221 in a manner of bonding or the like, to reduce heat transferred from the substrate 221 to the circuit board 222. A shape of the cushion block 2212 may be a rectangle, a circle, a long strip, or the like, and a length and a width of the cushion block 221 may be less than 3 mm, to reduce an area of the cushion block 221 and to minimize the heat backflow effect.

A process of assembling the emission assembly 22 and the bracket 21 may be as follows: First, the laser 224 and the temperature control device 225 are separately fastened to the circuit board 222, then the circuit board 222 and the optical lens 223 are separately fastened to the substrate 221 by using glue, the buffer sheet 227 is welded to the substrate 221, to form the emission assembly 22, then the emission assembly 22 is bonded to the bracket 21 by using glue, and the thermal gel 226 is coated between the temperature control device 225 and the bracket 21.

Overall, in this embodiment of this application, the laser 224 and the optical lens 223 that are most sensitive to precision are fastened to a same module, that is, the substrate 221. This can avoid that thermal expansion and cold contraction effect caused by a temperature change affects size precision between the laser 224 and the optical lens 223. In addition, the temperature control device 225 is disposed to implement active temperature control, and to match a design of reducing heat backflow, so that a temperature control problem of the laser 224 can be resolved, and impact of a temperature on a wavelength of a laser beam emitted by the laser 224 is avoided.

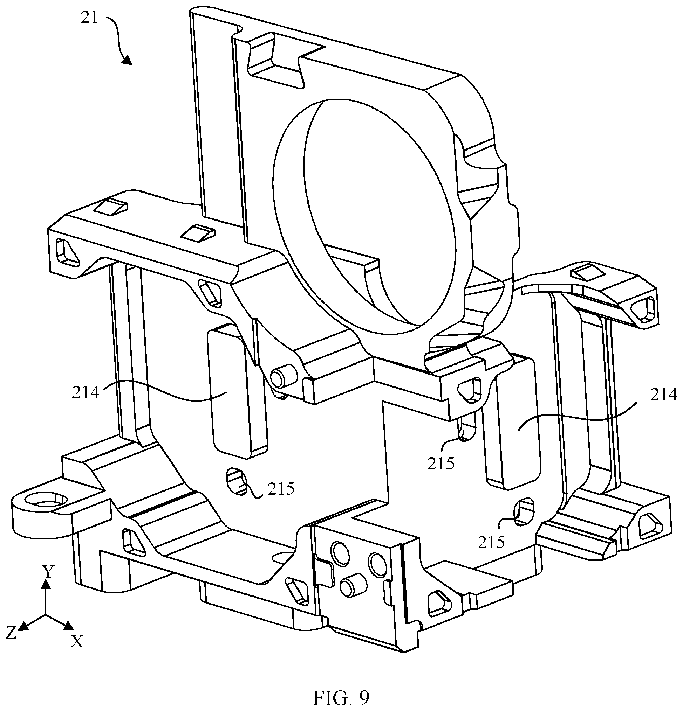

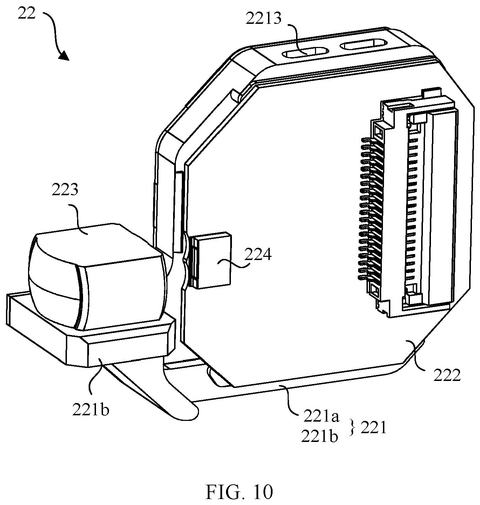

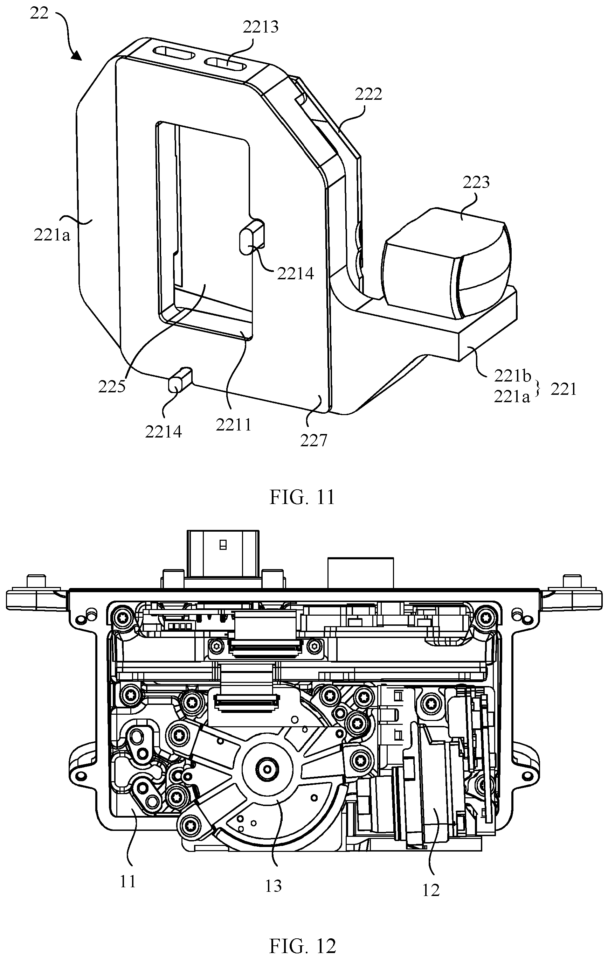

FIG. 9 is a schematic diagram of a structure of a bracket according to an embodiment of this application. FIG. 10 is a schematic diagram of a structure of an emission assembly according to an embodiment of this application. FIG. 11 is a schematic diagram of a structure of an emission assembly from another angle according to an embodiment of this application. Refer to FIG. 9 to FIG. 11. In this embodiment of this application, an installation column 2214 is disposed on a side that is of the substrate 221 and that faces the bracket 21, an installation hole 215 is disposed on a side that is of the bracket 21 and that faces the substrate 221, the installation column 2214 is located in the installation hole 215, and a gap between the installation column 2214 and the installation hole 215 is filled with an adhesive.

A connection between the installation column 2214 and the installation hole 215 may be considered as a mortise and tenon joint structure, and the adhesive is filled between the installation column 2214 and the installation hole 215, to increase adhesive bonding strength between the emission assembly 22 and the bracket 21, so that reliability of the adhesive can be further met in cases of high and low temperatures and shock vibration.

For example, there may be two installation columns 2214. The two installation columns 2214 may be respectively disposed on two adjacent outer sides of the hole 2211, the installation holes 215 and the installation columns 2214 are correspondingly disposed, and the two installation holes 215 may be respectively disposed on two adjacent outer sides of the installation boss 214. It should be understood that the buffer sheet 227 needs to avoid the installation column 2214.

Still refer to FIG. 10 and FIG. 11. The substrate 221 may include a main body part 221a and a support 221b, the support 221b is connected to a side wall of the main body part 221a, a plane on which the support 221b is located is perpendicular to a plane on which the main body part 221a is located, the support 221b is located on a side that is of the main body part 221a and that faces the circuit board 222, the circuit board 222 is connected to the main body part 221a, the optical lens 223 is connected to the support 221b, the laser 224 is located at an end that is of the circuit board 222 and that is close to the optical lens 223, and the laser 224 and the optical lens 223 are disposed opposite to each other.

The substrate 221 has two structures, that is, the main part 221a and the support 221b that are respectively used to carry the laser 224 and the optical lens 223. On a basis of integrating the laser 224 and the optical lens 223 on the same substrate 221, a structure of the substrate 221 is appropriately planned, so that the optical lens 223 can be aligned with the laser 224. With reference to FIG. 5 and FIG. 6, it can be learned that the optical lenses 223 in the two emission assemblies 22 are disposed close to the mirror group 24, so that laser beams emitted by the two lasers 224 may separately pass through the optical lenses 223, converge in the mirror group 24, and then be emitted outward.

In addition, at least one slot 2213 may be further provided in the substrate 221, to reduce a heat conduction area of the substrate 221 and to reduce heat backflow effect. The slot 2213 may be provided on a side wall of the main part 221a. A quantity and a shape of the slot 2213 are not specifically limited in this embodiment of this application. For example, there are two slots 2213 in the figure.

FIG. 12 is a schematic top view of a lidar according to an embodiment of this application. Refer to FIG. 12. The optical machine 12 and the scanner 13 may be separately fastened to the housing 11, and a laser beam emitted by the optical machine 12 may be illuminated on a reflective surface of a rotation mirror in the scanner 13 and then be reflected.

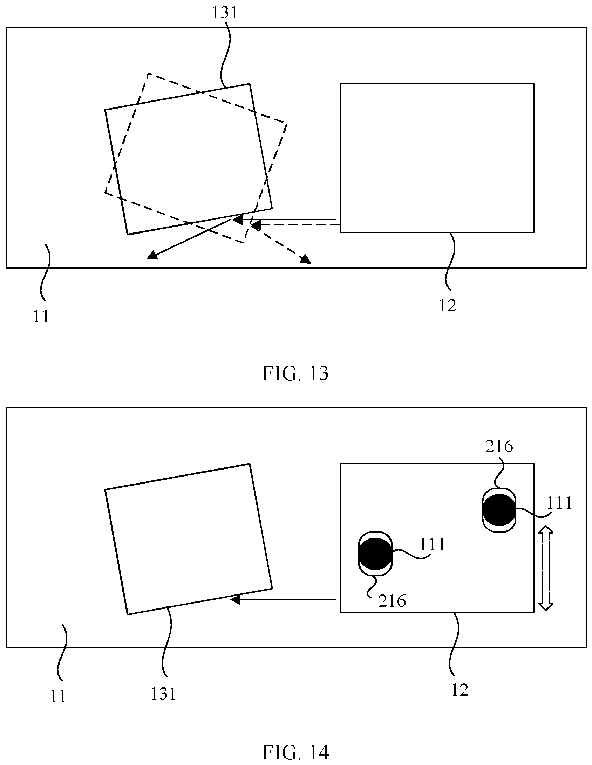

FIG. 13 is a schematic diagram of an operating principle of a lidar according to an embodiment of this application. Refer to FIG. 13, in a use process, in a scene, the laser beam emitted by the optical machine 12 is reflected by a rotation mirror 131 and then reflected to a side away from the optical machine 12 (as shown by solid line arrows in the figure). This scene is a scene in which a field of view is +70 degrees. In another scene, the laser beam emitted by the optical machine 12 is reflected by a rotation mirror 131 and then reflected to a side close to the optical machine 12 (as shown by dashed line arrows in the figure). This scene is a scene in which a field of view is -70 degrees. It should be understood that if the optical machine 12 and the rotation mirror 131 are not aligned, in a large field of view, the laser beam emitted by the optical machine 12 may not be reflected by the rotation mirror 131, that is, a light leakage phenomenon exists, and a field of view range of the lidar is affected.

Therefore, a requirement for size precision between the optical machine 12 and the scanner 13 is high. Especially in a large FOV scene, a size of the rotation mirror 131 is usually limited by an overall size of a product, and cannot be increased. A projection size of the rotation mirror 131 on an optical path is reduced, and is basically equal to a size of a spot. There is no size margin on two sides. Therefore, the spot of the optical machine 12 and the rotation mirror 131 need to be completely aligned. A higher degree of alignment indicates that the lidar can achieve a larger FOV.

FIG. 14 is a schematic diagram of a simplified structure of a lidar according to an embodiment of this application. Refer to FIG. 14. In this embodiment of this application, pins 111 and kidney-shaped holes 216 are disposed to implement cooperation between the optical machine 12 and the housing 11. A length extension direction of the kidney-shaped hole 216 is perpendicular to a direction of the light output axis of the optical machine 12, so that a location of the optical machine 12 relative to the housing 11 can be matched. In other words, the location of the optical machine 12 can be fine adjusted in a direction perpendicular to the light output axis, so that the location of the optical machine 12 can be adjusted when assembled on the housing 11 (an adjustment direction of the optical machine 12 is shown by an arrow in the figure). This helps improve location precision between the optical machine 12 and the rotation mirror 131.

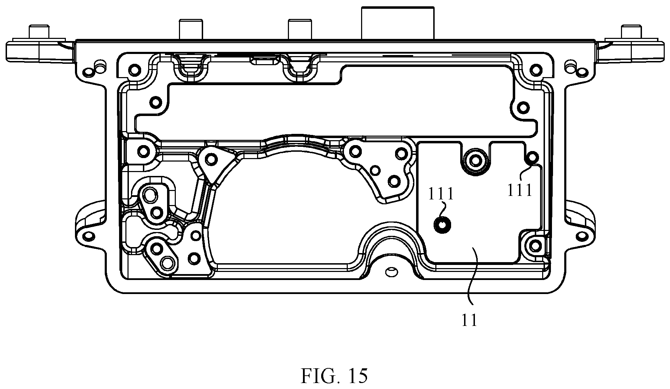

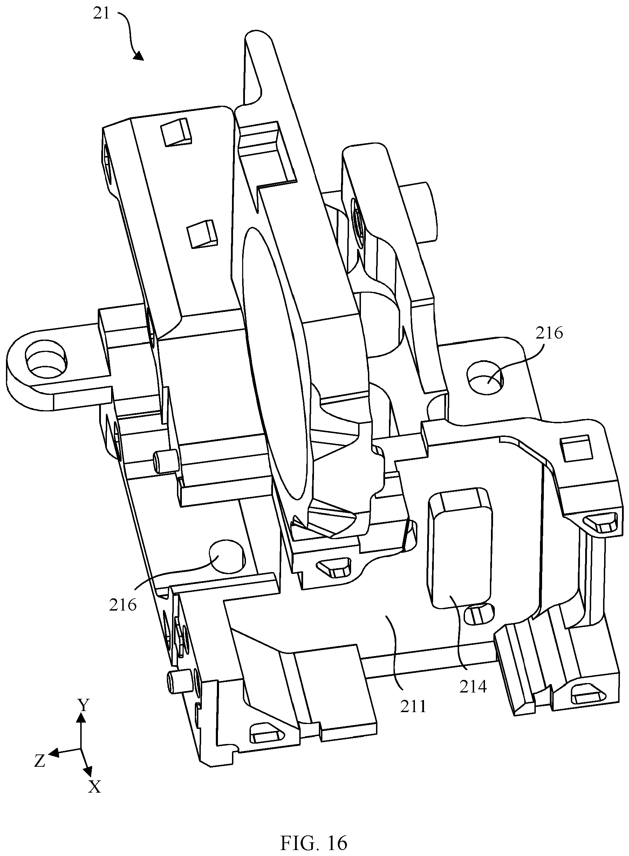

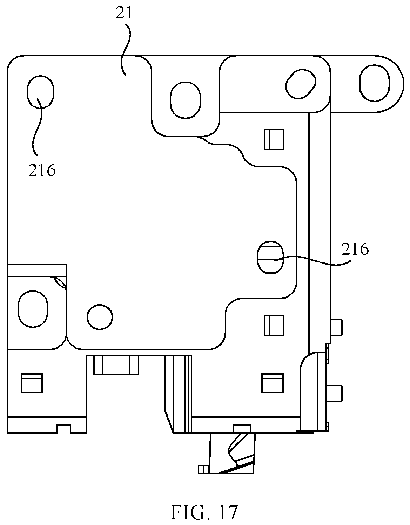

FIG. 15 is a top view of a housing according to an embodiment of this application. FIG. 16 is a schematic diagram of a structure of a bracket from another angle according to an embodiment of this application. FIG. 17 is a bottom view of a bracket according to an embodiment of this application. Refer to FIG. 15 to FIG. 17. In a possible implementation, the pins 111 may be disposed on the housing 11, the kidney-shaped holes 216 may be provided in the bracket 21, a length direction of the kidney-shaped hole 216 is perpendicular to the light output axis of the optical machine 12, the pin 111 may be installed in the kidney-shaped hole 216, and a location of the pin 111 in the kidney-shaped hole 216 can be adjusted.

For example, there are at least two kidney-shaped holes 216, and the two kidney-shaped holes 216 may be spaced on a bottom wall of the bracket 21, so that the optical machine 12 is limited to move only in a length direction of the kidney-shaped holes 216 to be fine adjusted in location without rotation. This ensures reliability of location adjustment.

It is not difficult to understand that in another possible implementation, the kidney-shaped holes 216 may be provided in the housing 11, and the pins 111 may be disposed on the bracket 21, so that a function of adjusting the location of the optical machine 12 relative to the housing 11 can also be implemented.

For the lidar provided in the foregoing embodiments of this application, the optical lens and the laser are fastened to the same substrate, and the temperature control device is used to actively control the temperature of the laser, so that the operating temperature of the laser can be accurately controlled not to exceed the standard. This avoids the impact of the temperature on the laser wavelength. In addition, the deviation of size precision between the laser and the optical lens at high and low temperatures can be avoided, so that optical performance of the lidar can be improved.

In addition, the buffer sheet and a fitting structure of the installation column and the installation hole are disposed. This can improve adhesive bonding strength of the emission assembly and the bracket, avoid that the adhesive cracks at high and low temperatures and under shock vibration, and improve bonding reliability. The kidney-shaped holes are designed in the bracket to match the pins designed on the housing, so that the location of the optical machine relative to the housing can be adjusted in one direction and fastened. This implements precise alignment of a relative location of the optical machine and the scanner, and the large field of view is achieved.

Overall, for the lidar provided in the foregoing embodiments of this application, the temperature control device 225 is disposed, so that the temperature of the laser 224 can be constantly controlled at 75±5°C at an external ambient temperature of -40°C to +85°C. The laser 224 and the optical lens 223 are integrated on the same substrate 221, and the substrate 221 is disposed to be made of a material with a low coefficient of thermal expansion, so that a size deviation between the laser 224 and the optical lens 223 can be controlled to be less than 5 microns at the external ambient temperature of -40°C to +85°C. In addition, in high and low temperature and vibration tests, reliability of bonding between the emission assembly 22 and the bracket 21 meets a design requirement. The location of the optical machine 12 is set to be adjustable, so that performance of a large field of view of 140 degrees can be achieved.

An embodiment of this application provides a vehicle. The lidar provided in the foregoing embodiments of this application can reduce impact of a temperature on performance of the lidar, and provide performance of a large field of view. This helps improve performance such as ranging of the vehicle, and facilitates intelligence of the vehicle.

Finally, it should be noted that the foregoing embodiments are merely intended for describing the technical solutions in embodiments of this application, instead of limiting the technical solutions.

## Claims

1. A lidar (100), comprising a bracket (21) and an emission assembly (22), wherein:
the emission assembly (22) comprises a substrate (221), a circuit board (222), an optical lens (223), a laser (224), and a temperature control device (225),
**characterised in that** the substrate (221) is connected to the bracket (21),
the optical lens (223) and the circuit board (222) are each separately connected to a first side of the substrate (221), the first side being opposite to a second side of the substrate (221) which is attached to the bracket (21),
the laser (224) is connected to a first side of the circuit board (222), the first side being opposite to a second side of the circuit board (222) which is attached to and faces the substrate (221),
the temperature control device (225) is connected to the second side of the circuit board (222),
a hole (2211) passes through the substrate (221),
the temperature control device (225) and the bracket (21) are connected to each other through the hole (2211), and
a thermal gel (226) is disposed between the temperature control device (225) and the bracket (21).

2. The lidar (100) according to claim 1, wherein:
the substrate (221) comprises a main body part (221a) and a support (221b),
the support (221b) is connected to a side wall of the main body part (221a),
a plane on which the support (221b) is located is perpendicular to a plane on which the main body part (221a) is located,
the support (221b) is located on a side of the main body part (221a) that faces the circuit board (222),
the circuit board (222) is connected to the main body part (221a), the optical lens (223) is connected to the support (221b),
the laser (224) is located at an end that is of the circuit board (222) and that is close to the optical lens (223), and the laser (224) and
the optical lens (223) are disposed opposite to each other.

3. The lidar (100) according to claim 1 or 2, wherein the temperature control device (225) is a thermo electric cooler, and the thermo electric cooler is configured to heat or cool the circuit board (222).

4. The lidar (100) according to any one of claims 1 to 3, wherein a coefficient of thermal expansion of the substrate (221) is less than or equal to 10 PPM.

5. The lidar (100) according to claim 4, wherein the coefficient of thermal expansion of the substrate (221) ranges from 4 PPM to 10 PPM.

6. The lidar (100) according to any one of claims 1 to 5, wherein an absolute value of a difference between the coefficient of thermal expansion of the substrate (221) and a coefficient of thermal expansion of the circuit board (222) is less than or equal to 2 PPM.

7. The lidar (100) according to claim 6, wherein the substrate (221) is made of a material comprising a kovar alloy, ceramic, or glass.

8. The lidar (100) according to claim 6, wherein the circuit board (222) is made of a material comprising aluminum nitride ceramic.

9. The lidar (100) according to any one of claims 1 to 8, wherein the bracket (21) is made of a material comprising an aluminum alloy.

10. The lidar (100) according to any one of claims 1 to 9, wherein each of two ends of the circuit board (222) is fastened to the substrate (221) by using a cushion block (2212), and the cushion block (2212) is a part of a structure protruding from a surface of the substrate (221), or the cushion block (2212) is a structure independent of the substrate (221) and is fastened to the substrate (221).

11. The lidar (100) according to claim 10, wherein both a length and a width of the cushion block (2212) are less than 3 mm.

12. The lidar (100) according to any one of claims 1 to 11, wherein the lidar (100) further comprises a buffer sheet (227), the buffer sheet (227) is located between the bracket (21) and the substrate (221), the buffer sheet (227) is bonded to the bracket (21) by using an adhesive, and the buffer sheet (227) is welded to the substrate (221), or the buffer sheet (227) is bonded to the substrate (221) by using an adhesive.

13. The lidar (100) according to claim 12, wherein a coefficient of thermal expansion of the buffer sheet (227) is greater than the coefficient of thermal expansion of the substrate (221), and the coefficient of thermal expansion of the buffer sheet (227) is less than a coefficient of thermal expansion of the bracket (21).

14. The lidar (100) according to claim 12, wherein an installation column (2214) is disposed on a side that is of the substrate (221) and that faces the bracket (21), an installation hole (215) is disposed on a side that is of the bracket (21) and that faces the substrate (221), the installation column (2214) is located in the installation hole (215), and a gap between the installation column (2214) and the installation hole (215) is filled with an adhesive.

15. The lidar (100) according to any one of claims 1 to 14, wherein the lidar (100) comprises an optical machine (12), the optical machine (12) comprises the bracket (21), the emission assembly (22), and the receiving assembly (23), and the receiving assembly (23) and the emission assembly (22) are separately fastened to the bracket (21).

16. The lidar (100) according to claim 15, wherein the lidar (100) further comprises a housing (11) and a scanner (13), both the optical machine (12) and the scanner (13) are installed on the housing (11), and a light output axis of the optical machine (12) is aligned with a rotation mirror (131) of the scanner (13).

17. The lidar (100) according to claim 16, wherein a pin (111) is disposed on the housing (11), a kidney-shaped hole (216) is provided in the bracket (21), a length direction of the kidney-shaped hole (216) is perpendicular to the light output axis, the pin (111) is installed in the kidney-shaped hole (216), and a location of the pin (111) in the kidney-shaped hole (216) is adjustable.

18. The lidar (100) according to any one of claims 1 to 17, wherein the optical lens (223) is bonded to the substrate (221) by using an adhesive, and the circuit board (222) is bonded to the substrate (221) by using an adhesive.

19. The lidar (100) according to any one of claims 1 to 18, wherein at least one slot (2213) is provided on a side wall of the substrate (221).

20. A vehicle, comprising a vehicle body and at least one lidar (100) according to any one of claims 1 to 19, wherein the lidar (100) is fastened to the vehicle body.

## Patentansprüche

1. Lidar (100), das eine Halterung (21) und eine Emissionsanordnung (22) umfasst, wobei:
die Emissionsanordnung (22) ein Substrat (221), eine Leiterplatte (222), eine optische Linse (223), einen Laser (224) und eine Temperatursteuerungsvorrichtung (225) umfasst, **dadurch gekennzeichnet, dass** das Substrat (221) mit der Halterung (21) verbunden ist, die optische Linse (223) und die Leiterplatte (222) jeweils separat mit einer ersten Seite des Substrats (221) verbunden sind, wobei die erste Seite einer zweiten Seite des Substrats (221) gegenüberliegt, die an der Halterung (21) angebracht ist,
der Laser (224) mit einer ersten Seite der Leiterplatte (222) verbunden ist, wobei die erste Seite einer zweiten Seite der Leiterplatte (222) gegenüberliegt, die an dem Substrat (221) angebracht ist und diesem zugewandt ist,
die Temperatursteuerungsvorrichtung (225) mit der zweiten Seite der Leiterplatte (222) verbunden ist,
ein Loch (2211) das Substrat (221) durchdringt,
die Temperatursteuerungsvorrichtung (225) und die Halterung (21) durch das Loch (2211) miteinander verbunden sind, und
ein Wärmegel (226) zwischen der Temperatursteuerungsvorrichtung (225) und der Halterung (21) angeordnet ist.

2. Lidar (100) nach Anspruch 1, wobei:
das Substrat (221) ein Hauptkörperteil (221a) und eine Stütze (221b) umfasst,
die Stütze (221b) mit einer Seitenwand des Hauptkörperteils (221a) verbunden ist,
eine Ebene, auf der sich die Stütze (221b) befindet, senkrecht zu einer Ebene ist, auf der sich das Hauptkörperteil (221a) befindet,
die Stütze (221b) an einer Seite des Hauptkörperteils (221a) angeordnet ist, die der Leiterplatte (222) zugewandt ist,
die Leiterplatte (222) mit dem Hauptkörperteil (221a) verbunden ist, die optische Linse (223) mit der Stütze (221b) verbunden ist,
der Laser (224) an einem Ende angeordnet ist, das zu der Leiterplatte (222) gehört und das nahe der optischen Linse (223) liegt, und der Laser (224) und
die optische Linse (223) einander gegenüberliegend angeordnet sind.

3. Lidar (100) nach Anspruch 1 oder 2, wobei die Temperatursteuerungsvorrichtung (225) ein thermoelektrischer Kühler ist, und der thermoelektrische Kühler konfiguriert ist, um die Leiterplatte (222) zu heizen oder zu kühlen.

4. Lidar (100) nach einem der Ansprüche 1 bis 3, wobei ein Koeffizient der thermischen Ausdehnung des Substrats (221) kleiner als oder gleich 10 PPM ist.

5. Lidar (100) nach Anspruch 4, wobei der Koeffizient der thermischen Ausdehnung des Substrats (221) von 4 PPM bis 10 PPM reicht.

6. Lidar (100) nach einem der Ansprüche 1 bis 5, wobei ein Absolutwert einer Differenz zwischen dem Koeffizienten der thermischen Ausdehnung des Substrats (221) und einem Koeffizienten der thermischen Ausdehnung der Leiterplatte (222) kleiner als oder gleich 2 PPM ist.

7. Lidar (100) nach Anspruch 6, wobei das Substrat (221) aus einem Material hergestellt ist, das eine Kovar-Legierung, Keramik oder Glas umfasst.

8. Lidar (100) nach Anspruch 6, wobei die Leiterplatte (222) aus einem Material hergestellt ist, das Aluminiumnitrid-Keramik umfasst.

9. Lidar (100) nach einem der Ansprüche 1 bis 8, wobei die Halterung (21) aus einem Material hergestellt ist, das eine Aluminiumlegierung umfasst.

10. Lidar (100) nach einem der Ansprüche 1 bis 9, wobei jedes von zwei Enden der Leiterplatte (222) unter Verwendung eines Polsterblocks (2212) an dem Substrat (221) befestigt ist, und der Polsterblock (2212) ein Teil einer Struktur ist, die von einer Oberfläche des Substrats (221) vorsteht, oder der Polsterblock (2212) eine von dem Substrat (221) unabhängige Struktur ist und an dem Substrat (221) befestigt ist.

11. Lidar (100) nach Anspruch 10, wobei sowohl eine Länge als auch eine Breite des Polsterblocks (2212) weniger als 3 mm betragen.

12. Lidar (100) nach einem der Ansprüche 1 bis 11, wobei das Lidar (100) ferner ein Pufferblatt (227) umfasst, das Pufferblatt (227) zwischen der Halterung (21) und dem Substrat (221) angeordnet ist, das Pufferblatt (227) unter Verwendung eines Klebstoffs mit der Halterung (21) verbunden ist, und das Pufferblatt (227) mit dem Substrat (221) verschweißt ist, oder das Pufferblatt (227) unter Verwendung eines Klebstoffs mit dem Substrat (221) verbunden ist.

13. Lidar (100) nach Anspruch 12, wobei ein Koeffizient der thermischen Ausdehnung des Pufferblatts (227) größer ist als der Koeffizient der thermischen Ausdehnung des Substrats (221), und der Koeffizient der thermischen Ausdehnung des Pufferblatts (227) kleiner ist als ein Koeffizient der thermischen Ausdehnung der Halterung (21).

14. Lidar (100) nach Anspruch 12, wobei eine Installationssäule (2214) auf einer Seite angeordnet ist, die zu dem Substrat (221) gehört und die der Halterung (21) zugewandt ist, ein Installationsloch (215) auf einer Seite angeordnet ist, die zu der Halterung (21) gehört und die dem Substrat (221) zugewandt ist, die Installationssäule (2214) in dem Installationsloch (215) angeordnet ist, und ein Spalt zwischen der Installationssäule (2214) und dem Installationsloch (215) mit einem Klebstoff gefüllt ist.

15. Lidar (100) nach einem der Ansprüche 1 bis 14, wobei das Lidar (100) eine optische Maschine (12) umfasst, die optische Maschine (12) die Halterung (21), die Emissionsanordnung (22) und die Empfangsanordnung (23) umfasst, und die Empfangsanordnung (23) und die Emissionsanordnung (22) separat an der Halterung (21) befestigt sind.

16. Lidar (100) nach Anspruch 15, wobei das Lidar (100) ferner ein Gehäuse (11) und einen Scanner (13) umfasst, sowohl die optische Maschine (12) als auch der Scanner (13) an dem Gehäuse (11) installiert sind, und eine Lichtausgangsachse der optischen Maschine (12) mit einem Rotationsspiegel (131) des Scanners (13) ausgerichtet ist.

17. Lidar (100) nach Anspruch 16, wobei ein Stift (111) an dem Gehäuse (11) angeordnet ist, ein nierenförmiges Loch (216) in der Halterung (21) bereitgestellt ist, eine Längsrichtung des nierenförmigen Lochs (216) senkrecht zu der Lichtausgabeachse ist, der Stift (111) in dem nierenförmigen Loch (216) installiert ist, und eine Position des Stifts (111) in dem nierenförmigen Loch (216) einstellbar ist.

18. Lidar (100) nach einem der Ansprüche 1 bis 17, wobei die optische Linse (223) unter Verwendung eines Klebstoffs mit dem Substrat (221) verbunden ist und die Leiterplatte (222) unter Verwendung eines Klebstoffs mit dem Substrat (221) verbunden ist.

19. Lidar (100) nach einem der Ansprüche 1 bis 18, wobei mindestens ein Schlitz (2213) an einer Seitenwand des Substrats (221) bereitgestellt ist.

20. Fahrzeug, das einen Fahrzeugkörper und mindestens ein Lidar (100) nach einem der Ansprüche 1 bis 19 umfasst, wobei das Lidar (100) an dem Fahrzeugkörper befestigt ist.

## Revendications

1. Lidar (100), comprenant un support (21) et un ensemble d'émission (22), dans lequel :
l'ensemble d'émission (22) comprend un substrat (221), une carte de circuit imprimé (222), une lentille optique (223), un laser (224) et un dispositif de régulation de température (225),
**caractérisé en ce que** le substrat (221) est relié au support (21),
la lentille optique (223) et la carte de circuit imprimé (222) sont chacune reliées séparément à un premier côté du substrat (221), le premier côté étant opposé à un second côté du substrat (221) qui est attaché au support (21),
le laser (224) est relié à un premier côté de la carte de circuit imprimé (222), le premier côté étant opposé à un second côté de la carte de circuit imprimé (222) qui est attaché et fait face au substrat (221),
le dispositif de régulation de température (225) est relié au second côté de la carte de circuit imprimé (222),
un trou (2211) traverse le substrat (221),
le dispositif de régulation de température (225) et le support (21) sont reliés l'un à l'autre par le biais du trou (2211), et
un gel thermique (226) est disposé entre le dispositif de régulation de température (225) et le support (21).

2. Lidar (100) selon la revendication 1, dans lequel :
le substrat (221) comprend une partie corps principal (221a) et un élément de soutien (221b),
l'élément de soutien (221b) est relié à une paroi latérale de la partie corps principal (221a), un plan sur lequel l'élément de soutien (221b) est situé est perpendiculaire à un plan sur lequel la partie corps principal (221a) est située,
l'élément de soutien (221b) est situé sur un côté de la partie corps principal (221a) qui fait face à la carte de circuit imprimé (222),
la carte de circuit imprimé (222) est reliée à la partie corps principal (221a), la lentille optique (223) est reliée à l'élément de soutien (221b),
le laser (224) est situé au niveau d'une extrémité qui fait partie de la carte de circuit imprimé (222) et qui est proche de la lentille optique (223), et le laser (224) et
la lentille optique (223) sont disposés à l'opposé l'un de l'autre.

3. Lidar (100) selon la revendication 1 ou 2, dans lequel le dispositif de régulation de température (225) est un refroidisseur thermoélectrique, et le refroidisseur thermoélectrique est configuré pour chauffer ou refroidir la carte de circuit imprimé (222).

4. Lidar (100) selon l'une quelconque des revendications 1 à 3, dans lequel un coefficient de dilatation thermique du substrat (221) est inférieur ou égal à 10 PPM.

5. Lidar (100) selon la revendication 4, dans lequel le coefficient de dilatation thermique du substrat (221) est compris entre 4 PPM et 10 PPM.

6. Lidar (100) selon l'une quelconque des revendications 1 à 5, dans lequel une valeur absolue d'une différence entre le coefficient de dilatation thermique du substrat (221) et un coefficient de dilatation thermique de la carte de circuit imprimé (222) est inférieure ou égale à 2 PPM.

7. Lidar (100) selon la revendication 6, dans lequel le substrat (221) est constitué d'un matériau comprenant un alliage de Kovar, de la céramique, ou du verre.

8. Lidar (100) selon la revendication 6, dans lequel la carte de circuit imprimé (222) est constituée d'un matériau comprenant de la céramique au nitrure d'aluminium.

9. Lidar (100) selon l'une quelconque des revendications 1 à 8, dans lequel le support (21) est constitué d'un matériau comprenant un alliage d'aluminium.

10. Lidar (100) selon l'une quelconque des revendications 1 à 9, dans lequel chacune des deux extrémités de la carte de circuit imprimé (222) est fixée au substrat (221) en utilisant un bloc amortisseur (2212), et le bloc amortisseur (2212) est une partie d'une structure faisant saillie à partir d'une surface du substrat (221), ou le bloc amortisseur (2212) est une structure indépendante du substrat (221) et est fixé au substrat (221).

11. Lidar (100) selon la revendication 10, dans lequel à la fois une longueur et une largeur du bloc amortisseur (2212) sont inférieures à 3 mm.

12. Lidar (100) selon l'une quelconque des revendications 1 à 11, dans lequel le lidar (100) comprend en outre une feuille tampon (227), la feuille tampon (227) est située entre le support (21) et le substrat (221), la feuille tampon (227) est liée au support (21) en utilisant un adhésif, et la feuille tampon (227) est soudée au substrat (221), ou la feuille tampon (227) est liée au substrat (221) en utilisant un adhésif.

13. Lidar (100) selon la revendication 12, dans lequel un coefficient de dilatation thermique de la feuille tampon (227) est supérieur au coefficient de dilatation thermique du substrat (221), et le coefficient de dilatation thermique de la feuille tampon (227) est inférieur à un coefficient de dilatation thermique du support (21).

14. Lidar (100) selon la revendication 12, dans lequel une colonne d'installation (2214) est disposée sur un côté qui fait partie du substrat (221) et qui fait face au support (21), un trou d'installation (215) est disposé sur un côté qui fait partie du support (21) et qui fait face au substrat (221), la colonne d'installation (2214) est située dans le trou d'installation (215), et un espace entre la colonne d'installation (2214) et le trou d'installation (215) est rempli d'un adhésif.

15. Lidar (100) selon l'une quelconque des revendications 1 à 14, dans lequel le lidar (100) comprend une machine optique (12), la machine optique (12) comprend le support (21), l'ensemble d'émission (22) et l'ensemble de réception (23), et l'ensemble de réception (23) et l'ensemble d'émission (22) sont fixés séparément au support (21).

16. Lidar (100) selon la revendication 15, dans lequel le lidar (100) comprend en outre un boîtier (11) et un dispositif de balayage (13), à la fois la machine optique (12) et le dispositif de balayage (13) sont installés sur le boîtier (11), et un axe de sortie de lumière de la machine optique (12) est aligné sur un miroir de rotation (131) du dispositif de balayage (13).

17. Lidar (100) selon la revendication 16, dans lequel une broche (111) est disposée sur le boîtier (11), un trou en forme de haricot (216) est prévu dans le support (21), une direction de longueur du trou en forme de haricot (216) est perpendiculaire à l'axe de sortie de lumière, la broche (111) est installée dans le trou en forme de haricot (216), et un emplacement de la broche (111) dans le trou en forme de haricot (216) est ajustable.

18. Lidar (100) selon l'une quelconque des revendications 1 à 17, dans lequel la lentille optique (223) est liée au substrat (221) en utilisant un adhésif, et la carte de circuit imprimé (222) est liée au substrat (221) en utilisant un adhésif.

19. Lidar (100) selon l'une quelconque des revendications 1 à 18, dans lequel au moins une fente (2213) est prévue sur une paroi latérale du substrat (221).

20. Véhicule, comprenant une carrosserie de véhicule et au moins un lidar (100) selon l'une quelconque des revendications 1 à 19, dans lequel le lidar (100) est fixé à la carrosserie de véhicule.
